# FASCICULE DE BREVET EUROPEEN

(11) **EP 3 679 243 B1**
(45) Date de publication et mention de la délivrance du brevet: **20.10.2021**
(21) Numéro de dépôt: 18773530.3
(22) Date de dépôt: 30.07.2018
(51) Int. Cl.: F03C 1/04, F03C 1/06, F04B 1/12, F04B 1/04, F04B 53/14, F04B 53/08, F04B 53/18, F16J 1/08, F16J 10/04

(54) **PISTON HYDRAULIQUE À SOUPAPE DE REFROIDISSEMENT ET LUBRIFICATION**
HYDRAULISCHER KOLBEN MIT VENTIL FÜR KÜHLUNG UND SCHMIERUNG
HYDRAULIC PISTON WITH VALVE FOR COOLING AND LUBRICATION

(30) Priorité: 05.09.2017 FR 1758196
(43) Date de publication de la demande: 15.07.2020
(73) Titulaire: Rabhi, Vianney, 69006 Lyon (FR)
(72) Inventeur: Rabhi, Vianney, 69006 Lyon (FR)
(74) Mandataire: Vuillermoz, Bruno
(86) Numéro de dépôt international: PCT/FR2018/051958
(87) Numéro de publication internationale: WO 2019/048750

(56) Documents cités:
- EP-B1- 3 025 060
- WO-A1-2017/109329
- DE-A1-102011 106 920

## Description

La présente invention est relative à un piston hydraulique à soupape de refroidissement et lubrification, ledit piston coopérant avec un cylindre pour former par exemple la chambre hydraulique de volume variable d'une pompe ou d'un moteur hydraulique à pistons axiaux ou radiaux.

Un tel piston pour pompes et moteurs hydrauliques est connu de la demande de brevet international WO-20171109329-A1.

L'étanchéité des pistons des pompes et moteurs hydrauliques à pistons axiaux ou radiaux est le plus souvent obtenue en laissant un faible jeu diamétral entre lesdits pistons et le cylindre avec lequel ils coopèrent. A titre d'exemple, ledit jeu peut valoir de vingt à quarante micromètres pour un piston de vingt millimètres de diamètre. Un jeu diamétral aussi petit permet usuellement d'obtenir des niveaux d'étanchéité acceptables jusqu'à des pressions opérationnelles de l'ordre de trois à cinq cent bars, ceci sous réserve de prévoir un recouvrement suffisant entre le piston et le cylindre dans lequel translate ledit piston.

Prévoir un petit jeu diamétral entre le piston et son cylindre forme une solution d'étanchéité simple et robuste. Le prix de revient en fabrication de ladite solution reste en outre modéré, malgré la précision d'usinage élevée qu'elle requiert.

On remarque que les pistons des pompes et moteurs hydrauliques à pistons axiaux sont ordinairement terminés par des patins articulés qui glissent sur un plateau incliné ou inclinable selon que lesdites pompes ou lesdits moteurs sont à cylindrée fixe ou à cylindrée variable. Lorsque ledit plateau est incliné et qu'une pression est appliquée sur l'un quelconque des pistons par quelque fluide hydraulique que ce soit - par exemple par de l'huile - l'effort qu'exerce le patin articulé dudit piston sur ledit plateau produit par réaction un effort radial entre ledit piston et le cylindre avec lequel il coopère.

Ledit effort radial génère une pression de contact entre ledit piston et son cylindre. Ladite pression s'applique, de première part, au niveau de l'extrémité dudit piston qui est opposée au patin articulé, et de deuxième part, au niveau de l'extrémité dudit cylindre qui débouche en direction du plateau incliné.

Les pistons des pompes et moteurs hydrauliques tels qu'ils viennent d'être décrits sont responsables de pertes énergétiques de diverses natures qui réduisent l'efficacité énergétique totale desdites pompes et desdits moteurs.

Parmi lesdites pertes énergétiques, on distingue en premier lieu les fuites de fluide hydraulique. Sous l'effet de la pression, du fluide hydraulique est en effet expulsé de la chambre hydraulique via l'espace que forme le jeu diamétral laissé entre le piston et le cylindre, puis s'échappe au niveau de l'extrémité du cylindre qui débouche en direction du plateau incliné. On note d'ailleurs qu'en effectuant des mouvements de va-et-vient dans son cylindre, le piston produit un effet de pompe au niveau du jeu diamétral laissé entre lui et ledit cylindre, ce qui augmente le débit de fuite hydraulique.

Le cisaillement du fluide hydraulique qui est intercalé entre le piston et le cylindre compte aussi parmi lesdites pertes énergétiques. Ledit cisaillement produit un effort résistant qui s'oppose à la rotation de la pompe ou du moteur hydraulique. Cet effort de cisaillement est d'autant plus important que d'une part, le fluide hydraulique est visqueux, et que d'autre part, le jeu diamétral laissé entre le piston et le cylindre est faible.

Enfin, lesdites pertes énergétiques proviennent aussi de l'effort qu'exerce le patin de piston sur le plateau incliné. Ledit effort se traduit par des efforts radiaux exercés par le piston sur son cylindre. Conjugués avec le déplacement dudit piston dans ledit cylindre, lesdits efforts radiaux génèrent des pertes énergétiques qui sont le produit desdits efforts par le coefficient de frottement entre le piston et son cylindre, multiplié par la distance parcourue par ledit piston dans ledit cylindre.

Comme on le comprend aisément à la lecture de ce qui précède, pour réduire la perte énergétique totale produite par les pistons des pompes et moteurs hydrauliques, il faut au minimum poursuivre le triple objectif de limiter autant que possible les fuites hydrauliques, de réduire au maximum les pertes par cisaillement du fluide hydraulique, et de minimiser les pertes par frottement produites au niveau des contacts entre le piston et son cylindre.

Il existe néanmoins diverses contradictions qui s'opposent à la poursuite simultanée de ces trois objectifs.

En effet, en l'état de l'art et de la technique, réduire les fuites de fluide hydraulique ne peut pas se faire en réduisant encore le jeu diamétral laissé entre le piston et son cylindre car les pertes par cisaillement augmenteraient de façon inacceptable.

En effet, ces pertes par cisaillement augmentées se traduiraient par une quantité de chaleur accrue émise dans un volume plus faible de fluide hydraulique compris dans le jeu diamétral laissé entre le piston et son cylindre. Il résulterait de cette situation que la température dudit fluide augmenterait drastiquement tandis que sa viscosité baisserait. Ledit fluide perdrait une grande partie de ses qualités lubrifiantes ce qui augmenterait les pertes par frottement qui en retour augmenteraient encore la quantité de chaleur reçue par le fluide hydraulique compris dans le jeu diamétral.

S'ensuivrait alors un emballement des émissions de chaleur et de la hausse de la température locale du fluide hydraulique, avec au-delà d'un certain seuil la destruction par cokéfaction dudit fluide compris dans le jeu diamétral laissé entre le piston et son cylindre. En plus de cela, la température du piston pourrait monter au point que ledit piston se dilate plus vite que le cylindre dans lequel il translate. Ce dernier effet conduirait au grippage dudit piston dans ledit cylindre.

Réduire le jeu diamétral laissé entre le piston et son cylindre pour réduire les fuites de fluide hydraulique n'est donc guère possible, et ce d'autant plus que pour réduire les pertes par cisaillement, il faudrait au contraire augmenter ledit jeu. En effet, les pertes par cisaillement augmentent approximativement de façon inversement proportionnelle audit jeu.

Outre réduire les pertes par cisaillement, augmenter ledit jeu réduirait également les pertes par frottement induites par les efforts radiaux exercés par le piston sur son cylindre. En effet, augmenter raisonnablement le jeu diamétral laissé entre le piston et le cylindre favoriserait la formation et le maintien d'un régime de lubrification hydrodynamique entre ledit piston et ledit cylindre, notamment parce que le film de fluide hydraulique - s'il s'agit d'huile par exemple - serait plus épais, et parce que ce dernier serait maintenu à plus basse température.

Toutefois, augmenter le jeu diamétral entre le piston et son cylindre n'est pas non plus la solution car ceci se ferait au détriment des fuites hydrauliques qui passent entre ces deux pièces. Lesdites fuites augmenteraient drastiquement.

Comme les objectifs qui viennent d'être décrits sont contradictoires dans leur réalisation, le jeu diamétral entre les pistons et les cylindres des pompes et moteurs hydrauliques à pistons axiaux ou radiaux selon l'état de l'art résulte d'un compromis entre les fuites hydrauliques d'une part, et les pertes par cisaillement d'huile et par frottement mécanique d'autre part.

On pourrait imaginer sortir de ce compromis en plaçant un joint d'étanchéité sur le piston soit à l'extrémité dudit piston la plus proche de la chambre hydraulique, soit en son milieu en prenant garde que ledit joint ne puisse jamais sortir du cylindre. Ainsi, il serait possible d'avoir un fort jeu diamétral entre le piston et son cylindre puisque l'étanchéité ne serait plus tributaire du jeu.

Le problème de quelque joint ou segment d'étanchéité que ce soit, c'est que le piston n'est plus assez lubrifié dans son cylindre car trop peu d'huile est introduite dans l'espace formé par le jeu diamétral laissé entre le piston et son cylindre.

En outre, ladite huile doit être renouvelée en permanence pour évacuer la chaleur émise par les fuites, les pertes par cisaillement, et les pertes par frottement résiduelles. Installer un joint étanche sur les pistons des pompes et moteurs hydrauliques à pistons axiaux ou radiaux conduit donc immanquablement au séchage du cylindre et ceci potentiellement jusqu'au grippage du piston dans ledit cylindre, et à un vieillissement prématuré du fluide hydraulique localement soumis à des températures excessives.

En outre, on remarquera que certaines pompes ou certains moteurs hydrauliques comportent des pièces mécaniques qui sont positionnées à l'opposé de la chambre hydraulique et qui sont en tout ou partie lubrifiées et/ou refroidies grâce au débit de fuite passant entre le piston et le cylindre. Empêcher toute fuite de fluide hydraulique entre le piston et son cylindre conduirait à devoir lubrifier lesdites pièces par un apport d'huile volontaire, par exemple au moyen d'un injecteur.

C'est pour résoudre ces différents problèmes que le piston hydraulique à soupape de refroidissement et lubrification selon l'invention permet, en fonction de son mode de réalisation :
- Le montage d'un joint ou segment d'étanchéité entre le piston et son cylindre, ledit joint jugulant les fuites de fluide hydraulique qui surviennent au niveau du jeu diamétral laissé entre ledit piston et ledit cylindre particulièrement lorsque une pression élevée règne dans la chambre hydraulique de la pompe hydraulique ou du moteur hydraulique qui le reçoit, ledit montage ne compromettant plus - par rapport à l'état de l'art - la bonne lubrification dudit piston dans ledit cylindre ;
- De laisser passer un débit de fuite d'huile de lubrification et de refroidissement important au niveau du jeu diamétral entre le piston et son cylindre seulement lorsque une pression basse règne dans la chambre hydraulique de la pompe hydraulique ou du moteur hydraulique qui le reçoit, ladite pression basse étant par exemple celle communément appelée « pression de gavage » ;
- D'optimiser le jeu diamétral laissé entre le piston et son cylindre pour minimiser les pertes par cisaillement et par frottement en n'augmentant que marginalement les pertes énergétiques liées aux fuites de fluide hydraulique passant par le jeu diamétral laissé entre ledit piston et ledit cylindre ;
- D'augmenter significativement le rendement de toute pompe hydraulique ou moteur hydraulique qui le reçoit ;
- De n'augmenter que très marginalement le prix de revient en fabrication de la pompe ou du moteur hydraulique qui le reçoit.

Il est entendu qu'outre son application aux pompes hydrauliques et aux moteurs hydrauliques à pistons axiaux ou radiaux, le piston hydraulique à soupape de refroidissement et lubrification suivant l'invention peut s'appliquer à toute autre pompe, moteur, moteur-pompe, vérin ou appareil de quelque forme ou nature que ce soit, que ces organes ou appareils soient hydrauliques ou pneumatiques, et dès lors que la configuration desdits organes ou appareils permet avantageusement d'exploiter ledit piston suivant l'invention.

Les autres caractéristiques de la présente invention ont été décrites dans la description et dans les revendications secondaires dépendantes directement ou indirectement de la revendication principale.

Le piston hydraulique est constitué d'un corps cylindrique qui expose une surface cylindrique externe logée à faible jeu dans un cylindre de sorte à laisser un espace interstitiel entre ladite surface et ledit cylindre, ledit piston pouvant translater dans ledit cylindre avec lequel il forme une chambre hydraulique de volume variable, une première extrémité dudit piston présentant une face de compression débouchant dans la chambre hydraulique pour recevoir la pression d'un fluide tandis que l'autre extrémité dudit piston présente une face d'appui de piston pour exercer un effort sur des moyens de transmission.

Le piston hydraulique suivant la présente invention comprend :
- Des moyens d'étanchéité aménagés sur la surface cylindrique externe, lesdits moyens pouvant former une étanchéité avec le cylindre ;
- Au moins un conduit de refroidissement et lubrification qui est en tout ou partie aménagé dans le corps cylindrique, ledit conduit commençant d'une part, avec une entrée de conduit qui communique directement ou indirectement avec la chambre hydraulique, et finissant d'autre part, avec une sortie de conduit qui débouche directement ou indirectement au niveau de la surface cylindrique externe, le fluide pouvant circuler dans ledit conduit depuis ladite entrée jusqu'à ladite sortie quand la pression régnant dans la chambre hydraulique est supérieure à la pression régnant dans l'espace interstitiel, cependant que les moyens d'étanchéité interdisent audit fluide de passer par l'extérieur du corps cylindrique pour aller de ladite entrée à ladite sortie ;
- Au moins une soupape de refroidissement et lubrification logée en tout ou partie dans le conduit de refroidissement et lubrification et qui peut s'ouvrir ou se fermer pour respectivement permettre ou interdire la circulation du fluide dans ledit conduit, ladite soupape comportant une portée de fermeture de débit qui peut soit, rester à une certaine distance d'une surface de contact de soupape aménagée à l'intérieur ou à l'extrémité du conduit de refroidissement et lubrification pour laisser passer le fluide, soit, être maintenue au contact de ladite surface pour former avec cette dernière une ligne de contact étanche qui interdit le passage dudit fluide ;
- Au moins un piston actionneur de soupape rigidement relié à la soupape de refroidissement et lubrification de sorte à pouvoir manœuvrer cette dernière en fermeture et/ou en ouverture, ledit piston étant logé à faible jeu dans un cylindre d'actionneur aménagé dans ou sur le corps cylindrique, ledit piston pouvant se mouvoir en translation longitudinale dans ledit cylindre et présentant une face haute-pression exposée à la pression régnant dans la chambre hydraulique, tandis qu'à l'opposé de ladite face haute-pression, ledit piston présente une face côté basse-pression qui communique directement ou indirectement soit, avec l'espace interstitiel, soit, avec la face d'appui de piston, soit, avec les deux ;
- Au moins un orifice de calibrage de débit qui limite le débit maximal de fluide pouvant circuler dans le conduit de refroidissement et lubrification, ledit orifice étant placé - sur le parcours du fluide - en série avec la soupape de refroidissement et lubrification, et en parallèle avec le piston actionneur de soupape ;
- Au moins un ressort de rappel de soupape qui tend à éloigner la portée de fermeture de débit de la surface de contact de soupape ;
- Au moins une butée de soupape qui fixe la distance maximale d'éloignement de la portée de fermeture de débit par rapport à la surface de contact de soupape.

Le piston hydraulique suivant la présente invention comprend un ressort de rappel de soupape qui est en tout ou partie logé à l'intérieur d'une chambre intermédiaire de fluide formée entre le piston actionneur de soupape et la ligne de contact étanche.

Le piston hydraulique suivant la présente invention comprend des moyens d'étanchéité qui sont constitués d'au moins un segment à coupe logé dans au moins une gorge d'étanchéité aménagée dans le corps cylindrique et débouchant sur la surface cylindrique externe.

Le piston hydraulique suivant la présente invention comprend des moyens d'étanchéité qui sont constitués d'au moins un joint circulaire souple logé dans au moins une gorge d'étanchéité aménagée dans le corps cylindrique et débouchant sur la surface cylindrique externe.

Le piston hydraulique suivant la présente invention comprend une gorge de dégagement anti-cisaillement qui est aménagée dans le corps cylindrique, ladite gorge débouchant sur la surface cylindrique externe.

Le piston hydraulique suivant la présente invention comprend un diamètre de l'extrémité axiale du corps cylindrique située du côté de la face de compression qui se réduit graduellement sur une certaine longueur pour former une dépouille de portance.

Le piston hydraulique suivant la présente invention comprend un diamètre de l'extrémité axiale du cylindre située à l'opposé de la chambre hydraulique qui augmente graduellement sur une certaine longueur pour former un épanouissement de portance.

Le piston hydraulique suivant la présente invention comprend un orifice de calibrage de débit qui est aménagé à l'intérieur du piston actionneur de soupape dont il relie la face haute-pression et la face côté basse-pression ou l'une quelconque des deux dites faces, avec la surface cylindrique externe dudit piston.

Le piston hydraulique suivant la présente invention comprend un orifice de calibrage de débit qui est constitué du jeu laissé entre le piston actionneur de soupape et le cylindre d'actionneur avec lequel coopère ledit piston.

Le piston hydraulique suivant la présente invention comprend un corps cylindrique qui est traversé de part en part dans le sens de sa longueur par un conduit de lubrification des moyens de transmission qui débouche d'une part, sur la face de compression et d'autre part, sur la face d'appui de piston.

Le piston hydraulique suivant la présente invention comprend une soupape de refroidissement et lubrification et un piston actionneur de soupape qui sont réalisés dans un seul et même bloc de matière pour former un ensemble soupape-piston actionneur.

Le piston hydraulique suivant la présente invention comprend un ensemble soupape-piston actionneur qui est traversé de part en part dans le sens axial par le conduit de lubrification des moyens de transmission autour duquel il peut coulisser tout en formant avec ce dernier une étanchéité.

Le piston hydraulique suivant la présente invention comprend un ensemble soupape-piston actionneur qui est traversé de part en part dans le sens axial par le conduit de lubrification des moyens de transmission, ledit ensemble formant une partie dudit conduit.

Le piston hydraulique suivant la présente invention comprend un ensemble soupape-piston actionneur qui est terminé par un embout étanche coulissant qui forme une étanchéité avec un cylindre récepteur d'embout aménagé dans le conduit de lubrification des moyens de transmission, ledit embout étanche permettant audit ensemble de se mouvoir en translation longitudinale par rapport audit conduit.

La description qui va suivre en regard des dessins annexés et donnés à titre d'exemples non limitatifs permettra de mieux comprendre l'invention, les caractéristiques qu'elle présente, et les avantages qu'elle est susceptible de procurer :
Figure 1 est une vue en coupe schématique d'une pompe hydraulique à pistons axiaux à cylindrée variable équipée de pistons hydrauliques à soupape de refroidissement et lubrification selon l'invention.
Figure 2 est une vue en coupe schématique du piston hydraulique à soupape de refroidissement et lubrification selon l'invention dont l'ensemble soupape-piston actionneur est traversé de part en part dans le sens axial par le conduit de lubrification des moyens de transmission autour duquel il peut coulisser tout en formant avec ce dernier une étanchéité.

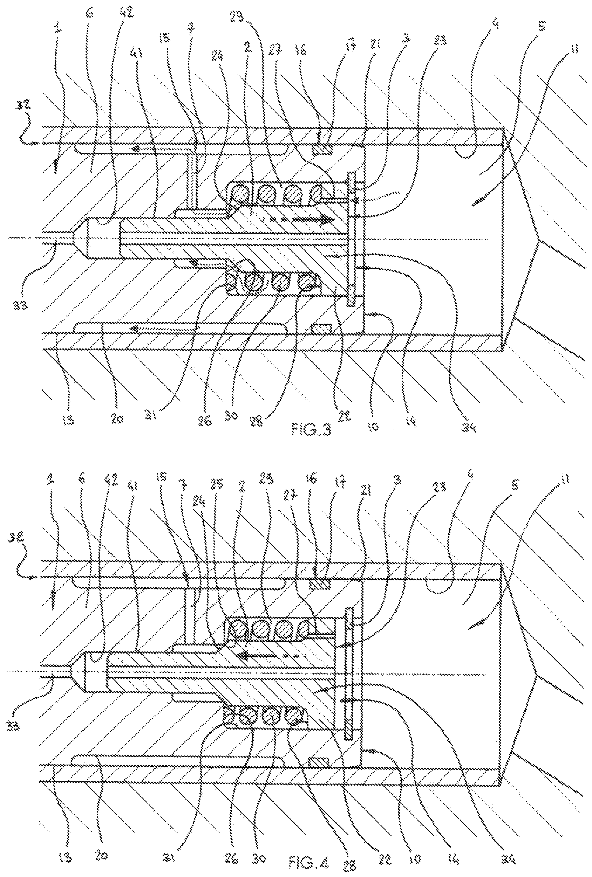

Figures 3 et 4 sont des vues en coupe schématique de détail du piston hydraulique à soupape de refroidissement et lubrification selon l'invention qui en illustrent le fonctionnement respectivement quand la pression qui règne dans la chambre hydraulique est basse, puis haute, l'ensemble soupape-piston actionneur étant d'une part, traversé dans le sens axial par le conduit de lubrification des moyens de transmission pour en former une partie et étant d'autre part, terminé par un embout étanche coulissant qui forme une étanchéité avec un cylindre récepteur d'embout aménagé dans ledit conduit de lubrification.
Figure 5 est une vue en coupe schématique de détail du piston hydraulique à soupape de refroidissement et lubrification selon l'invention et suivant sa variante montrée en figure 2.
Figure 6 est une vue en coupe schématique du piston hydraulique à soupape de refroidissement et lubrification selon l'invention dont la face basse-pression du piston actionneur de soupape est située en aval de la ligne de contact étanche par rapport au sens d'écoulement du fluide.
Figure 7 est une vue en coupe schématique du piston hydraulique à soupape de refroidissement et de lubrification selon l'invention dénué de conduit de lubrification des moyens de transmission.
Figure 8 est une vue tridimensionnelle en écorché du piston hydraulique à soupape de refroidissement et de lubrification selon l'invention et suivant sa variante telle que représentée en figures 3 et 4, ledit piston étant assemblé.
Figure 9 est une vue tridimensionnelle éclatée du piston hydraulique à soupape de refroidissement et de lubrification selon l'invention et suivant sa variante telle que représentée en figures 3 et 4.

### DESCRIPTION DE L'INVENTION :

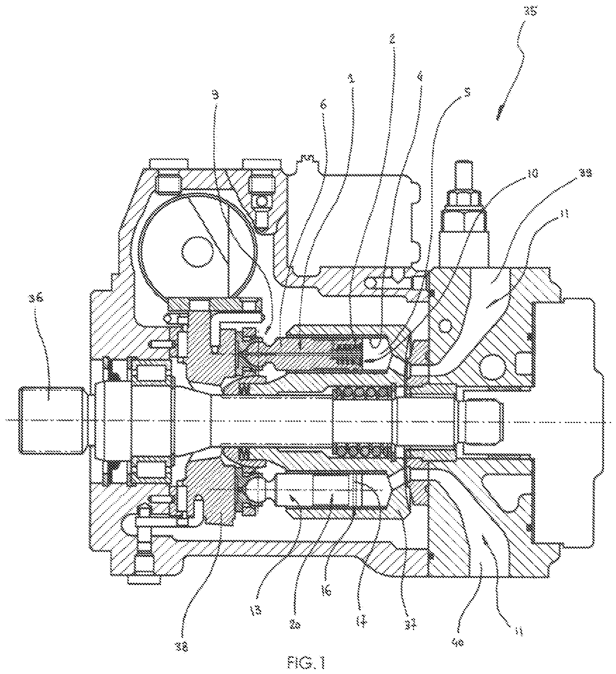

On a montré en figures 1 à 9 le piston hydraulique 1 à soupape de refroidissement et lubrification 2, divers détails de ses composants, ses variantes, et ses accessoires.

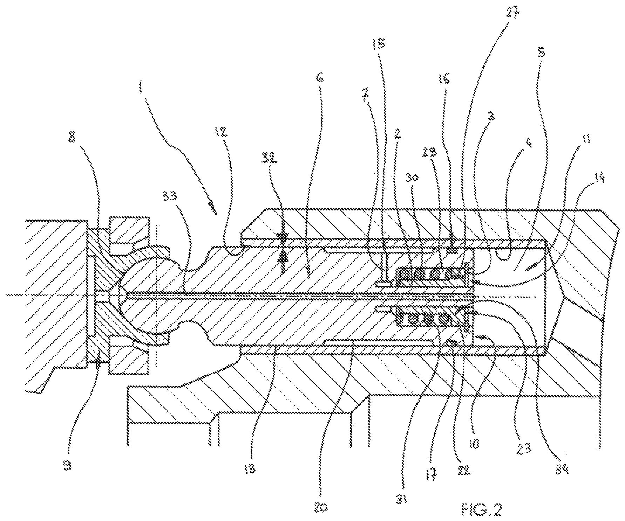

Comme on le voit particulièrement en figures 1 et 2, le piston hydraulique 1 est constitué d'un corps cylindrique 6 qui expose une surface cylindrique externe 13 logée à faible jeu dans un cylindre 4 de sorte à laisser un espace interstitiel 32 entre ladite surface 13 et ledit cylindre 4, ledit piston 1 pouvant translater dans ledit cylindre 4 avec lequel il forme une chambre hydraulique 5 de volume variable.

On remarque, particulièrement en figures 1 et 2 qu'une première extrémité du piston hydraulique 1 présente une face de compression 10 débouchant dans la chambre hydraulique 5 pour recevoir la pression d'un fluide 11 tandis que l'autre extrémité dudit piston 3 présente une face d'appui de piston 8 pour exercer un effort sur des moyens de transmission 9.

Les figures 1 à 9 illustrent que le piston hydraulique 1 à soupape de refroidissement et lubrification 2 selon l'invention comprend des moyens d'étanchéité 16 aménagés sur la surface cylindrique externe 13, lesdits moyens 16 pouvant former une étanchéité plus ou moins parfaite avec le cylindre 4 et étant de préférence aménagés sur la partie de la surface cylindrique externe 13 qui est proche de la chambre hydraulique 5.

On note que les moyens d'étanchéité 16 peuvent être simplement constitués d'une réduction locale de l'espace interstitiel 32 obtenue par une augmentation locale du diamètre de la surface cylindrique externe 13. Ladite augmentation peut être non-cylindrique et prendre par exemple la forme d'un bombé ou d'un bulbe qui s'articule dans le cylindre 4 qui le reçoit.

Il est particulièrement visible en figures 2 à 8 que le piston hydraulique 1 à soupape de refroidissement et lubrification 2 selon l'invention comprend au moins un conduit de refroidissement et lubrification 7 qui est en tout ou partie aménagé dans le corps cylindrique 6, ledit conduit 7 commençant d'une part, avec une entrée de conduit 14 qui communique directement ou indirectement avec la chambre hydraulique 5, et finissant d'autre part, avec une sortie de conduit 15 qui débouche directement ou indirectement au niveau de la surface cylindrique externe 13.

On notera que le fluide 11 peut circuler dans ledit conduit 7 depuis ladite entrée 14 jusqu'à ladite sortie 15 quand la pression régnant dans la chambre hydraulique 5 est supérieure à la pression régnant dans l'espace interstitiel 32, cependant que les moyens d'étanchéité 16 interdisent audit fluide 11 de passer par l'extérieur du corps cylindrique 6 pour aller de ladite entrée 14 à ladite sortie 15 lorsque lesdits moyens 16 forment une étanchéité avec le cylindre 4.

Sur les figures 1 à 9, on a montré que le piston hydraulique 1 à soupape de refroidissement et lubrification 2 selon l'invention comprend au moins une soupape de refroidissement et lubrification 2 logée en tout ou partie dans le conduit de refroidissement et lubrification 7 et qui peut s'ouvrir ou se fermer pour respectivement permettre ou interdire la circulation du fluide 11 dans ledit conduit 7.

Selon l'invention, la soupape de refroidissement et lubrification 2 comporte une portée de fermeture de débit 24 qui peut soit, rester à une certaine distance d'une surface de contact de soupape 26 aménagée à l'intérieur ou à l'extrémité du conduit de refroidissement et lubrification 7 pour laisser passer le fluide 11, soit, être maintenue au contact de ladite surface 26 pour former avec cette dernière une ligne de contact étanche 25 qui interdit le passage dudit fluide 11, ladite ligne 25 étant montrée en figure 4.

On remarque - particulièrement en figures 2 à 9 - que le piston hydraulique 1 à soupape de refroidissement et lubrification 2 selon l'invention comprend au moins un piston actionneur de soupape 22 qui est rigidement relié à la soupape de refroidissement et lubrification 2 de sorte à pouvoir manœuvrer cette dernière en fermeture et/ou en ouverture. Ledit piston 22 est logé à faible jeu dans un cylindre d'actionneur 31 aménagé dans ou sur le corps cylindrique 6 et peut se mouvoir en translation longitudinale dans ledit cylindre 31.

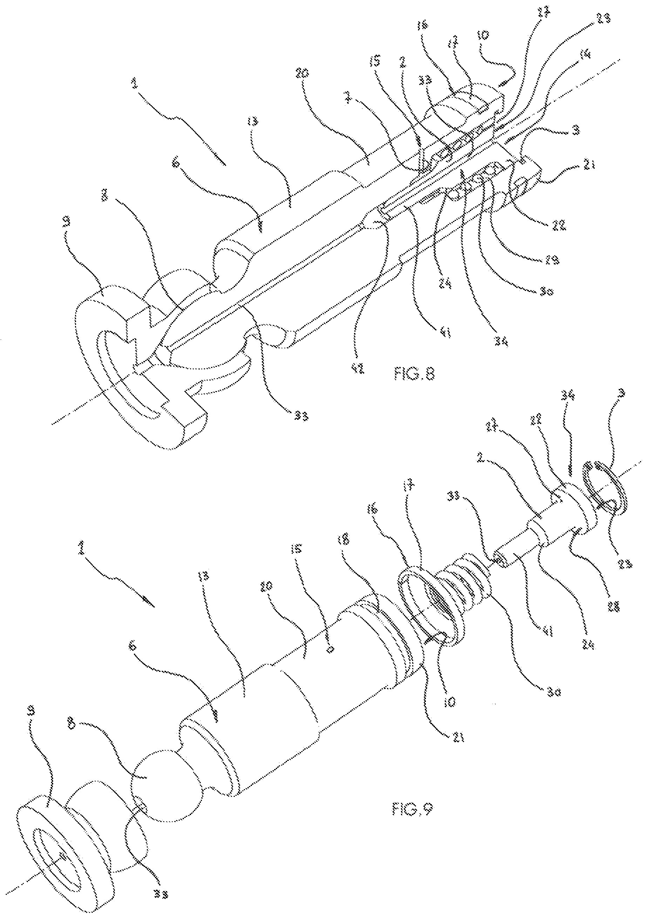

En figures 3 à 7 et en figure 9, on constate que le piston actionneur de soupape 22 présente une face haute-pression 23 exposée à la pression régnant dans la chambre hydraulique 5, tandis qu'à l'opposé de ladite face haute-pression 23, ledit piston 22 présente une face côté basse-pression 28 qui communique directement ou indirectement soit, avec l'espace interstitiel 32, soit, avec la face d'appui de piston 8, soit, avec les deux 32, 8.

On notera que le piston actionneur de soupape 22 ou le cylindre d'actionneur 31 peut comporter un joint de tout type connu de l'homme de l'art pour parfaire l'étanchéité constituée entre ledit piston 22 et ledit cylindre 31.

En figures 2 à 9, on voit distinctement que le piston hydraulique 1 à soupape de refroidissement et lubrification 2 selon l'invention comporte au moins un orifice de calibrage de débit 27 qui limite le débit maximal de fluide 11 pouvant circuler dans le conduit de refroidissement et lubrification 7.

L'orifice de calibrage de débit 27 est placé - sur le parcours du fluide 11 - en série avec la soupape de refroidissement et lubrification 2, et en parallèle avec le piston actionneur de soupape 22 c'est à dire que par rapport au sens d'écoulement du fluide 11 dans le conduit de refroidissement et lubrification 7, ledit orifice 27 est placé avant ou après la soupape de refroidissement et lubrification 2, tandis que le passage de fluide 11 au travers dudit orifice 27 n'est affecté en rien par la position du piston actionneur de soupape 22 dans la mesure ou ledit orifice 27 permet audit fluide 11 soit de contourner soit de traverser ledit piston 22.

Il est particulièrement visible en figures 2 à 9 que le piston hydraulique 1 à soupape de refroidissement et lubrification 2 selon l'invention comporte au moins un ressort de rappel de soupape 30 qui tend à éloigner la portée de fermeture de débit 24 de la surface de contact de soupape 26, ledit ressort 30 pouvant être hélicoïdal, de torsion, de traction, ou être une rondelle élastique de quelque type que ce soit et de manière générale, être de tout type connu de l'homme de l'art.

Sur les mêmes figures 2 à 9, il est également particulièrement visible que le piston hydraulique 1 à soupape de refroidissement et lubrification 2 selon l'invention présente au moins une butée de soupape 3 qui fixe la distance maximale d'éloignement de la portée de fermeture de débit 24 par rapport à la surface de contact de soupape 26.

La butée de soupape 3 peut notamment coopérer avec n'importe quelle partie constituante de la soupape de refroidissement et lubrification 2 ou du piston actionneur de soupape 22 avec lequel elle coopère. On note aussi que ladite butée 3 peut par exemple être constituée d'un circlip logé dans une gorge aménagée dans le cylindre d'actionneur 31, le piston actionneur de soupape 22 pouvant venir au contact dudit circlip.

Suivant les variantes du piston hydraulique 1 à soupape de refroidissement et lubrification 2 montrées en figures 1 à 9, on note que le ressort de rappel de soupape 30 peut être en tout ou partie logée à l'intérieur d'une chambre intermédiaire de fluide 29 formée entre le piston actionneur de soupape 22 et la ligne de contact étanche 25.

En figures 1 à 5 et 7 à 9, on remarque que les moyens d'étanchéité 16 peuvent être constitués d'au moins un segment à coupe 17 logé dans au moins une gorge d'étanchéité 18 aménagée dans le corps cylindrique 6 et débouchant sur la surface cylindrique externe 13.

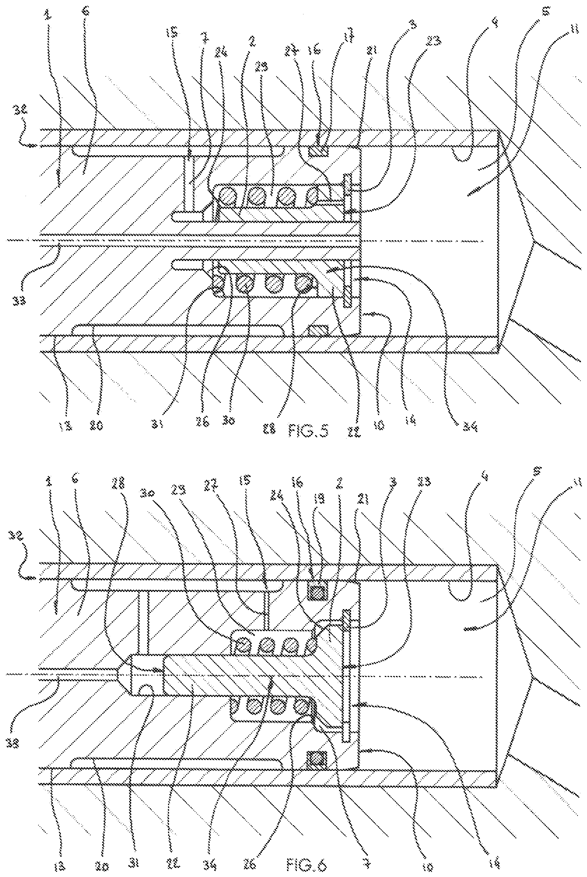

A titre de variante illustrée en figure 6, les moyens d'étanchéité 16 peuvent être également constitués d'au moins un joint circulaire souple 19 logé dans au moins une gorge d'étanchéité 18 aménagée dans le corps cylindrique 6 et débouchant sur la surface cylindrique externe 13.

On note que le joint circulaire souple 19 peut par exemple être fait d'un tore en élastomère, ou être de type composite notamment constitué d'un joint torique en élastomère qui coopère avec une bague en matière plastique chargée ou non de particules antifriction et/ou antiabrasion.

Les figures 1 à 9 montrent qu'avantageusement, une gorge de dégagement anti-cisaillement 20 peut être aménagée dans le corps cylindrique 6, ladite gorge 20 débouchant sur la surface cylindrique externe 13.

Selon cette configuration particulière, les parties de la surface cylindrique externe 13 situées axialement avant et après la gorge de dégagement anti-cisaillement 20 peuvent ne pas avoir exactement le même diamètre. Par exemple, la partie qui comprend les moyens d'étanchéité 16 peut présenter un diamètre sensiblement plus grand que la partie dénuée de moyens d'étanchéité 16.

A titre d'autre variante du piston hydraulique 1 à soupape de refroidissement et lubrification 2 particulièrement visible en figures 3 à 9, on remarque que le diamètre de l'extrémité axiale du corps cylindrique 6 située du côté de la face de compression 10 peut se réduire graduellement sur une certaine longueur pour former une dépouille de portance 21 qui, lorsque le piston hydraulique 1 remonte dans le cylindre 4 en direction de la chambre hydraulique 5, force du fluide 11 à pénétrer entre ladite extrémité axiale du corps cylindrique 6 et le cylindre 4 au niveau du contact entre ladite extrémité et ledit cylindre 4.

Cette configuration particulière du piston hydraulique 1 suivant l'invention favorise l'établissement d'un régime de lubrification hydrodynamique au niveau dudit contact et réduit les pertes par frottement générées par le déplacement du piston hydraulique 1 dans le cylindre 4.

En alternative ou de façon complémentaire, la figure 2 montre que le diamètre de l'extrémité axiale du cylindre 4 située à l'opposé de la chambre hydraulique 5 peut augmenter graduellement sur une certaine longueur pour former un épanouissement de portance 12 qui, lorsque le piston hydraulique 1 remonte dans le cylindre 4 en direction de la chambre hydraulique 5, force du fluide 11 à pénétrer entre le corps cylindrique 6 et ladite extrémité axiale du cylindre 4 au niveau du contact entre ladite extrémité et ledit cylindre 4.

Cette configuration particulière du piston hydraulique 1 suivant l'invention favorise également l'établissement d'un régime de lubrification hydrodynamique au niveau dudit contact et réduit les pertes par frottement générées par le déplacement du piston hydraulique 1 dans le cylindre 4.

En figures 2 à 5 et 7 à 9, on remarque que l'orifice de calibrage de débit 27 peut être aménagé à l'intérieur du piston actionneur de soupape 22 dont il relie la face haute-pression 23 et la face côté basse-pression 28 ou l'une quelconque des deux dites faces 23, 28 avec la surface cylindrique externe dudit piston 22.

En alternative, l'orifice de calibrage de débit 27 peut avantageusement être constitué du jeu laissé entre le piston actionneur de soupape 22 et le cylindre d'actionneur 31 avec lequel coopère ledit piston 22. On note d'ailleurs que ledit orifice 27 peut aussi être constitué de tout jeu laissé entre ledit piston 22 et toute autre pièce avec laquelle il pourrait constituer une étanchéité.

A titre d'autre variante du piston hydraulique 1 à soupape de refroidissement et lubrification 2 selon l'invention particulièrement visible en figures 2 à 6 et en figures 8 et 9, le corps cylindrique 6 peut être traversé de part en part dans le sens de sa longueur par un conduit de lubrification des moyens de transmission 33 qui débouche d'une part, sur la face de compression 10 et d'autre part, sur la face d'appui de piston 8.

Le conduit de lubrification des moyens de transmission 33 permet à du fluide 11 d'être acheminé depuis la chambre hydraulique 5 jusqu'aux moyens de transmission 9 lesquels peuvent par exemple être constitués de patins hydrauliques coopérant avec un plateau inclinable 38.

Les figures 1 à 9 illustrent que la soupape de refroidissement et lubrification 2 et le piston actionneur de soupape 22 peuvent être réalisés dans un seul et même bloc de matière pour former un ensemble soupape-piston actionneur 34.

La figure 5 montre que l'ensemble soupape-piston actionneur 34 peut être traversé de part en part dans le sens axial par le conduit de lubrification des moyens de transmission 33 autour duquel il peut coulisser tout en formant avec ce dernier une étanchéité.

En alternative montrée en figures 3, 4, 8 et 9 l'ensemble soupape-piston actionneur 34 peut être traversé de part en part dans le sens axial par le conduit de lubrification des moyens de transmission 33, ledit ensemble 34 formant une partie dudit conduit 33.

Sur ces mêmes figures, on remarque que l'ensemble soupape-piston actionneur 34 peut avantageusement être terminé par un embout étanche coulissant 41 qui forme une étanchéité avec un cylindre récepteur d'embout 42 aménagé dans le conduit de lubrification des moyens de transmission 33, ledit embout étanche 41 permettant audit ensemble 34 de se mouvoir en translation longitudinale par rapport audit conduit 33.

On note que l'embout étanche coulissant 41 ou le cylindre récepteur d'embout 42 peut comporter un joint de tout type connu de l'homme de l'art pour parfaire l'étanchéité constituée entre ledit embout 41 et ledit cylindre 42.

### FONCTIONNEMENT DE L'INVENTION :

Le fonctionnement du piston hydraulique 1 à soupape de refroidissement et lubrification 2 selon l'invention se comprend aisément au vu des figures 1 à 9.

La figure 1 montre le piston hydraulique 1 appliqué à une pompe hydraulique à pistons axiaux à cylindrée variable 35 connue en soi.

Lorsqu'un arbre de transmission 36 que possède ladite pompe 35 est mis en rotation par une source motrice non-représentée, ledit arbre 36 entraîne à son tour un barillet 37 en rotation, ce dernier étant solidaire dudit arbre 36.

Lorsqu'un plateau inclinable 38 que comporte ladite pompe 35 s'incline, concomitamment, les pistons hydrauliques 1 de ladite pompe 35 se mettent à effectuer des allers et retours dans le cylindre 4 avec lequel ils coopèrent. Il résulte desdits allers et retours que lesdits pistons 1 aspirent du fluide 11 dans un conduit d'admission 39 qui est alimenté en dit fluide 11 sous une pression basse dite « pression de gavage » de par exemple vingt bars, puis expulsent ledit fluide 11 dans un conduit de refoulement 40 dans lequel ledit fluide 11 est porté à une pression de par exemple quatre cents bars.

Pour expliquer le fonctionnement du piston hydraulique 1 à soupape de refroidissement et lubrification 2 selon l'invention, on supposera ici que le jeu diamétral laissé entre le corps cylindrique 6 du piston hydraulique 1 et le cylindre 4 avec lequel il coopère est - à titre d'exemple non-limitatif - de l'ordre de quatre-vingt à cent micromètres.

Soulignons que ce jeu est significativement supérieur à celui de l'ordre de vingt à quarante micromètres ordinairement laissé entre les pistons et le cylindre 4 avec lequel il coopèrent des pompes hydrauliques à pistons axiaux à cylindrée variable 35 selon l'art antérieur. Un jeu aussi important figure parmi les objectifs du piston hydraulique 1 à soupape de refroidissement et lubrification 2 selon l'invention, dans l'intention d'améliorer le rendement énergétique total de la pompe hydraulique à pistons axiaux à cylindrée variable 35 qui en est dotée, ou celui de tout autre appareil avantageusement compatible avec ledit piston 1.

En effet, le piston hydraulique 1 suivant l'invention permet que le jeu diamétral laissé entre le corps cylindrique 6 et le cylindre 4 ne soit plus déterminé par des impératifs d'étanchéité - au contraire une certaine perméabilité est recherchée - mais principalement sur des critères de guidage qui génère le moins possible de pertes par frottement et d'usure.

Pour expliquer le fonctionnement du piston hydraulique 1 à soupape de refroidissement et lubrification 2 selon l'invention, nous supposerons ici que, comme illustré en figures 1 à 5 et 7 à 9, les moyens d'étanchéité 16 de chaque piston hydraulique 1 sont constitués d'un segment à coupe 17 logé dans une gorge d'étanchéité 18 aménagée dans le corps cylindrique 6, ladite gorge 18 débouchant sur la surface cylindrique externe 13.

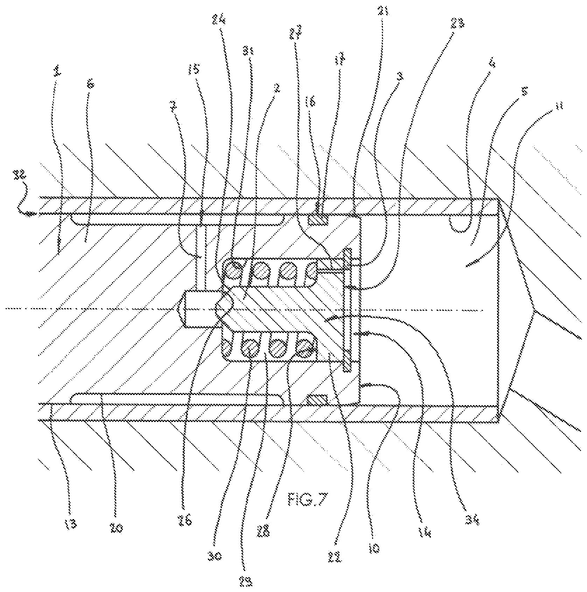

On notera - particulièrement en figures 3 à 5 et en figure 7 - le profil bombé dudit segment 17 et plus précisément de la surface externe dudit segment 17 qui est ici prévue pour être maintenue plaquée sur la paroi interne du cylindre 4 sous l'effet de la pression du fluide 11 que contient la chambre hydraulique 5.

Le segment à coupe 17 dont il est ici question passe successivement de l'état « parqué » lorsque la pression régnant dans la chambre hydraulique 5 est de vingt bars, à l'état « en contact étanche avec le cylindre 4 » lorsque la pression régnant dans ladite chambre 5 est de quatre cents bars.

L'étanchéité poussée que le segment à coupe 17 réalise avec le cylindre 4 lorsque la pression régnant dans la chambre hydraulique 5 est de quatre cents bars ne laisse fuir que très peu de fluide 11 entre ledit segment 17 et ledit cylindre 4.

Pour autant, quand la pression régnant dans la chambre hydraulique 5 n'est que de vingt bars et est donc basse, bien que ledit segment 17 soit effectivement parqué, l'étanchéité résiduelle que forme ledit segment 17 avec le cylindre 4 combinée avec le faible espace interstitiel 32 laissé entre la surface cylindrique externe 13 et le cylindre 4 ne laisse que peu de fluide 11 s'échapper de la chambre hydraulique 5 via ledit espace 32.

Une quantité aussi faible de fluide 1 est insuffisante pour convenablement refroidir et lubrifier le corps cylindrique 6 au niveau de son ou de ses contacts avec le cylindre 4. Il résulterait de cette situation un séchage du cylindre 4 compromettant son intégrité mécanique, une augmentation drastique des pertes énergétiques de frottement survenant au niveau du contact entre la surface cylindrique externe 13 et le cylindre 4, et une détérioration drastique du rendement énergétique et de la durée de vie de la pompe hydraulique à pistons axiaux à cylindrée variable 35. Davantage de fluide 11 est donc nécessaire que n'en laisse passer le seul segment à coupe 17 à l'état « parqué ».

C'est pourquoi - comme illustré en figure 3 - lorsque la pression régnant dans la chambre hydraulique 5 est basse, le piston hydraulique 1 suivant l'invention est prévu pour laisser passer du fluide 11 supplémentaire directement de la chambre hydraulique 5 à l'espace interstitiel 32, en contournant le segment à coupe 17.

Pour illustrer le fonctionnement du piston hydraulique 1 à soupape de refroidissement et lubrification 2 selon l'invention qui permet d'atteindre ce résultat, nous porterons une attention particulière aux figures 3 et 4.

La figure 3 montre le piston hydraulique 1 selon l'invention lorsque la pression du fluide 11 contenu dans la chambre hydraulique 5 n'est que de vingt bars, tandis que la figure 4 illustre ce qu'il advient du fonctionnement de l'invention lorsque la pression dudit fluide 11 contenu dans ladite chambre 5 est de quatre cents bars.

Nous supposerons que le piston hydraulique 1 à soupape de refroidissement et lubrification 2 selon l'invention est effectivement mis en œuvre dans une pompe hydraulique à pistons axiaux à cylindrée variable 35 telle que représentée en figure 1.

Comme on le voit en figure 3, la pression régnant dans la chambre hydraulique 5 étant de vingt bars, l'effort produit par le ressort de rappel de soupape 30 sur la face basse-pression 28 du piston actionneur de soupape 22 est supérieur à l'effort produit par la pression du fluide 11 sur la face haute-pression 23.

Il résulte de cette situation que l'ensemble soupape-piston actionneur 34 demeure au contact ou à proximité de la butée de soupape 3 avec laquelle il coopère, et que la portée de fermeture de débit 24 reste éloignée de la surface de contact de soupape 26. En conséquence, du fluide 11 peut circuler dans le conduit de refroidissement et lubrification 7 pour aller de la chambre hydraulique 5 à la cavité annulaire que forme la gorge de dégagement anti-cisaillement 20 avec le cylindre 4.

Pour cela, ledit fluide 11 passe d'abord au travers de l'orifice de calibrage de débit 27, puis dans la chambre intermédiaire de fluide 29. Il franchit ensuite l'espace laissé entre la portée de fermeture de débit 24 et la surface de contact de soupape 26, ceci avant de déboucher dans la gorge de dégagement anti-cisaillement 20 après avoir parcouru la section restante du conduit de refroidissement et lubrification 7.

Le fluide 11 peut ensuite s'immiscer dans l'espace interstitiel 32 pour lubrifier et refroidir toute zone de contact formée entre la surface cylindrique externe 13 et le cylindre 4, avant de déboucher au voisinage de la face d'appui de piston 8 pour être déversée dans le carter de la pompe hydraulique à pistons axiaux à cylindrée variable 35.

On notera que l'énergie totale perdue du fait dudit débit de fluide 11 volontairement généré par le piston hydraulique 1 suivant l'invention reste dans tous les cas faibles car la pression à laquelle s'opère ledit débit est basse. En contrepartie de cette faible déperdition énergétique et comme exposé ci-après, le piston hydraulique 1 suivant l'invention permet de réaliser une économie énergétique significative, de sorte que le bilan final soit en faveur d'un rendement total accru de la pompe hydraulique à pistons axiaux à cylindrée variable 35.

La figure 4 illustre ce qui survient lorsque la pression régnant dans la chambre hydraulique 5 est élevée - par exemple de quatre cents bars.

Dans ce cas, l'effort produit par le ressort de rappel de soupape 30 sur la face basse-pression 28 du piston actionneur de soupape 22 est inférieur à l'effort produit par la pression du fluide 11 sur la face haute-pression 23.

Il résulte de cette situation que le piston actionneur de soupape 22 plaque la portée de fermeture de débit 24 sur la surface de contact de soupape 26. En conséquence, la ligne de contact étanche 25 est formée et le fluide 11 ne peut plus circuler dans le conduit de refroidissement et lubrification 7.

L'étanchéité de la chambre hydraulique 5 est parfaite car le fluide 11 ne peut plus passer ni par le segment à coupe 17, ni par le conduit de refroidissement et lubrification 7. La pompe hydraulique à pistons axiaux à cylindrée variable 35 délivre alors son rendement maximal en étant à la fois étanche, et parfaitement lubrifiée.

L'objectif consistant à établir un débit de fluide 11 de lubrification et de refroidissement s'immisçant à basse pression dans l'espace interstitiel 32 tandis qu'aucune fuite de dit fluide 11 ne subsiste à haute pression est donc bien atteint.

On note qu'à basse pression de vingt bars dite « de gavage », le débit de fluide 11 passant au travers de l'orifice de calibrage de débit 27 dépend notamment de la différence entre la pression à laquelle est soumise la face de compression 10 et celle à laquelle est soumise la face d'appui de piston 8.

Comme on le déduit aisément des figures 3 et 4, ledit débit dépend également des restrictions de passage placées en série sur le parcours du fluide 11 constituées successivement de l'orifice de calibrage de débit 27, de l'espace laissé entre la portée de fermeture de débit 24 et la surface de contact de soupape 26, et de l'espace interstitiel 32.

En outre, le débit de fluide 11 circulant à basse pression dans le conduit de refroidissement et lubrification 7 dépend aussi de la tare et de la raideur du ressort de rappel de soupape 30.

En effet, en relation avec la figure 3, on comprend que - toutes choses étant égales par ailleurs, plus l'effort exercé par le ressort de rappel de soupape 30 sur la face basse-pression 28 est élevé, plus le débit de fluide 11 passant au travers de l'orifice de calibrage de débit 27 est élevé car plus l'espace laissé entre la portée de fermeture de débit 24 et la surface de contact de soupape 26 est grand.

En pratique, lorsque la pompe hydraulique à pistons axiaux à cylindrée variable 35 tourne et que la chambre hydraulique 5 passe cycliquement de vingt bars à quatre cents bars, l'ensemble soupape-piston actionneur 34 ne retourne cependant pas cycliquement au contact de la butée 3.

En effet, toujours en pratique, lorsque la pression régnant dans la chambre hydraulique 5 est de vingt bars, la portée de fermeture de débit 24 ne s'éloigne pas de plus de quelques microns à quelques centièmes de millimètre de la surface de contact de soupape 26. Cette distance correspond à l'équilibre trouvé entre toutes les forces en présence et notamment - en relation avec la figure 3 - à l'écart entre la pression régnant dans la chambre hydraulique 5 et celle régnant dans la chambre intermédiaire de fluide 29.

Le débit de fluide 11 de lubrification et de refroidissement que laisse passer à basse pression le piston hydraulique 1 à soupape de refroidissement et lubrification 2 selon l'invention est donc déterminé lors de la conception dudit piston 1 tenant compte des pressions de fonctionnement la pompe hydraulique à pistons axiaux à cylindrée variable 35, ceci en choisissant de manière appropriée la section de la face haute-pression 23, la section de la face basse-pression 28, le diamètre et la longueur de l'orifice de calibrage de débit 27, la tare et la raideur du ressort de rappel de soupape 30, et la valeur de l'espace interstitiel 32.

Toutes ces valeurs permettent aussi de déterminer la pression de seuil régnant dans la chambre hydraulique 5 au-delà de laquelle la ligne de contact étanche 25 est formée, et en deçà de laquelle la portée de fermeture de débit 24 reste à distance de la surface de contact de soupape 26.

On comprend de ce qui précède que le piston hydraulique 1 à soupape de refroidissement et lubrification 2 selon l'invention permet bien de sortir du compromis imposé par les pistons hydrauliques selon l'état de l'art et dont résulte le jeu diamétral usuellement laissé entre lesdits pistons et leur cylindre 4. En effet, selon l'état de l'art, ledit jeu doit être suffisamment important pour laisser passer suffisamment de fluide 11 pour lubrifier et refroidir lesdits pistons et pour limiter les pertes par cisaillement et par frottement, mais pas trop important pour ne pas laisser fuir trop de fluide 11. Il en résulte un compromis qui est éliminé par le piston hydraulique 1 à soupape de refroidissement et lubrification 2 selon l'invention.

On remarque d'ailleurs que parmi les nouvelles opportunités offertes par piston hydraulique 1 à soupape de refroidissement et lubrification 2 selon l'invention, le corps cylindrique 6 peut présenter une gorge de dégagement anti-cisaillement 20. Cette configuration particulière montrée en figure 1 à 9 est possible puisque l'étanchéité du piston hydraulique 1 n'est plus assurée par un faible jeu laissé entre ledit piston 1 et le cylindre 4 avec lequel il coopère, mais pas des moyens d'étanchéité 16 qui peuvent être par exemple un segment à coupe 17 comme montré en figures 1 à 5 et 7 à 9, ou un joint circulaire souple 19 comme illustré en figure 6, et ceci, sans compromettre la bonne lubrification et le bon refroidissement dudit piston 1 dans son cylindre 4.

Ladite configuration permet de fortement réduire les pertes par cisaillement que génère le fluide 11 compris dans l'espace interstitiel 32 lorsque le piston hydraulique 1 se déplace dans le cylindre 4. On note que ladite gorge de dégagement anti-cisaillement 20 est axialement aménagée dans une zone qui n'est soumise à aucune pression de contact significative entre la surface cylindrique externe 13 qu'expose le corps cylindrique 6 et le cylindre 4 pendant le fonctionnement du piston hydraulique 1, et qu'elle a pour effet d'améliorer le rendement énergétique total du piston hydraulique 1 suivant l'invention et donc, le rendement énergétique total de la pompe hydraulique à pistons axiaux à cylindrée variable 35 selon cet exemple d'application non-limitatif.

En effet, les pertes énergétiques de cisaillement sont approximativement inversement proportionnelles au jeu laissé entre deux pièces animées d'un mouvement relatif et entre lesquelles est emprisonné un film de fluide 11. Ainsi, la gorge de dégagement anti-cisaillement 20 a pour effet d'anéantir les pertes par cisaillement sur une longueur très significative de la surface cylindrique externe 13 du corps cylindrique 6.

Pour encore améliorer ledit rendement, on remarque - particulièrement en figures 3 à 7 - que le diamètre de l'extrémité axiale du corps cylindrique 6 située du côté de la face de compression 10 se réduit graduellement sur une certaine longueur pour former une dépouille de portance 21 qui, lorsque le piston hydraulique 1 remonte dans le cylindre 4 en direction de la chambre hydraulique 5, force du fluide 11 à pénétrer entre ladite l'extrémité axiale du corps cylindrique 6 et le cylindre 4 au niveau du contact entre ladite extrémité et ledit cylindre 4. Cette configuration particulière du piston hydraulique 1 suivant l'invention favorise l'établissement d'un régime de lubrification hydrodynamique au niveau dudit contact et réduit les pertes par frottement générées par le déplacement du piston hydraulique 1 dans le cylindre 4.

Dans le même objectif on remarque - particulièrement en figure 2 - que le diamètre de l'extrémité axiale du cylindre 4 située à l'opposé de la chambre hydraulique 5 augmente graduellement sur une certaine longueur pour former un épanouissement de portance 12 qui, lorsque le piston hydraulique 1 remonte dans le cylindre 4 en direction de la chambre hydraulique 5, force du fluide 11 à pénétrer entre le corps cylindrique 6 et ladite extrémité axiale du cylindre 4 au niveau du contact entre ladite extrémité et ledit cylindre 4.

Les possibilités du piston hydraulique 1 à soupape de refroidissement et lubrification 2 selon l'invention ne s'en limitent pas aux applications qui viennent d'être décrites et il doit d'ailleurs être entendu que la description qui précède n'a été donnée qu'à titre d'exemple et qu'elle ne limite nullement le domaine de ladite invention étant donné que ladite invention est définie par l'objet respectif des revendications.

## Revendications

1. Piston hydraulique (1) constitué d'un corps cylindrique (6) qui expose une surface cylindrique externe (13) logée à faible jeu dans un cylindre (4) de sorte à laisser un espace interstitiel (32) entre ladite surface (13) et ledit cylindre (4), ledit piston (1) pouvant translater dans ledit cylindre (4) avec lequel il forme une chambre hydraulique (5) de volume variable, une première extremité dudit piston (1) présentant une face de compression (10) débouchant dans la chambre hydraulique (5) pour recevoir la pression d`un fluide (11) tandis que l'autre extrémité dudit piston (3) présente une face d'appui de piston (8) pour exercer un effort sur des moyens de transmission (9), ledit piston (1) comprenant:
• Des moyens d`'étanchéite (16) aménagés sur la surface cylindrique externe (13), lesdits moyens (16) pouvant former une étanchéité avec le cylindre (4);
• Au moins un conduit de refroidissement et lubrification (7) qui est en tout ou partie aménagé dans le corps cylindrique (6), ledit conduit (7) commençant d'une part, avec une entrée de conduit (14) qui communique directement ou indirectement avec la chambre hydraulique (5), et finissant d'autre part, avec une sortie de conduit (15) qui débouche directement ou indirectement au niveau de la surface cylindrique externe (13), le fluide (11) pouvant circuler dans ledit conduit (7) depuis ladite entrée (14) jusqu'à ladite sortie (15) quand la pression régnant dans la chambre hydraulique (5) est supérieure à la pression régnant dans l'espace interstitiel (32), cepandant que les moyens d'ètanchéité (16) interdisent audit fluide (11) de passer par l'extérieur du corps cylindrique (6) pour aller de ladite entrée (14) à ladite sortie (15);
• Au moins une soupape de refroidissement et lubrification (2) logée en tout ou partie dans le conduit de refroidissement et lubrification (7) et qui peut s'ouvrir ou se fermer pour respectivement permettre ou interdire la circulation du fluide (11) dans ledit conduit (7), ladite soupape (2) comportant une portée de fermeture de débit (24) qui peut soit, rester à une certaine distance d'une surface de contact de soupape (26) aménagée à l'intérieur ou l'extrémité du conduit de refroidissement et lubrification (7) pour laisser passer le fluide (11), soit, être maintenue au contact de ladite surface (26) pour former avec cette dernière une ligne de contact étanche (25) qui interdit le passage dudit fluide (11);
Au moins un ressort de rappel de soupape (30) qui tend à éloigner la portée de fermeture de débit (24) de la surface de contact de soupape (26); et
Au moins une butée de soupape (3) qui fixe la distance maximale d'éloignement de la portée de fermeture de débit (24) par rapport à la surface de contact de soupape (26);
ledit piston (1) étant **caractérisé en ce qu'**il comprend:
• Au moins un piston actionneur de soupape (22) rigidement relié à la soupape de refroissement et lubrification (2) de sorte à pouvoir manoeuvrer cette dernière en fermeture et/ou en ouverture, ledit piston (22) étant logé à faible jeu dans un cylindre d'actionneur (31) aménagé dans ou sur le corps cylindrique (6), ledit piston (22) pouvant se mouvoir en translation longitudinale dans ledit cylindre (31) et présentant une face haute-pression (23) exposés à la pression régnant dans la chambre hydraulique (5), tandis qu`'à l'opposé de ladite face haute-pression (23), ledit piston (22) présente une face côté basse-presion (28) qui communique directement ou indirectement soit, avec l'espace interstitiel (32), soit avec la face d'appui de piston (8), soit, avec les deux (32, 8) ; et
• Au moins un orifice de calibrage de débit (27) qui limite le débit maximal de fluide (11) pouvant circuler dans le conduit de refroidissement et lubrication (7), ledit orifice (27) étant placé - sur le parcours du fluide (11) - en série avec la soupape de refroidissement et lubrification (2), et en parallèle avec le piston actionneur soupape (22).

2. Piston hydraulique suivant la revendication 1, **caractérisé en ce que** le ressort de rappel de soupape (30) est en tout ou partie logée à l'interieur d'une chambre intermédiare de fluide (29) formée entre le piston actionneur de soupape (22) et la ligne de contact étanche (25).

3. Piston hydraulique suivant la revendication 1, **caractérisé en ce que** les moyens d'etanchéité (16) sont constitués d'au moins un segment à coupe (17) logé dans au moins une gorge d'etanchéité (18) aménagée dans le corps cylindrique (6) et débouchant sur la surface cylindrique externe (13).

4. Piston hydraulique suivant la revendication 1, **caractérisé en ce que** les moyens d'étanchéité (16) sont constitués d'au moins un joint circulaire souple (19) logé dans au moins une gorge d'étanchéité (18) aménagée dans le corps cylindrique (6) et débouchant sur la surface cylindrique externe (13).

5. Piston hydraulique suivant la revendication 1, **caractérisé en ce qu'**une gorge de dégagement anti-cisaillement (20) est aménagée dans le corps cylindrique (6), ladite gorge (20) débouchant sur la surface cylindrique externe (13).

6. Piston hydraulique suivant la revendication 1, **caractérisé en ce que** le diamètre de l'extrémité axiale du corps cylindrique (6) la face de compression (10) se réduit graduellement sur une certaine longueur pour former une dépouille de portance (21).

7. Piston hydraulique suivant la revendication 1, **caractérisé en ce que** le diamètre de l'extrémité axiale du cylindre (4) située à l'opposé de la chambre hydraulique (5) augmente graduellement sur une certaine longueur pour former un épanouissement de portance (12).

8. Piston hydraulique suivant la revendication 1, **caractérisé en ce que** l'orifice de calibrage de débit (27) est aménagé á l'interieur du piston actionneur de soupape (22) dont il relie la face haute-pression (23) et la face côté basse-pression (28) ou l'une quelconque des deux dites faces (23, 28) avec la surface cylindrique externe dudit piston (22).

9. Piston hydraulique suivant la revendication 1, **caractérisé en ce que** l'orifice de calibrage de débit (27) est constitué du jeu laissé entre le piston actionneur de soupape (22) et le cylindre d'actionneur (31) avec lequel coopère ledit piston (22).

10. Piston hydraulique suivant la revendication 1, **caractérisé en ce que** le corps cylindrique (6) est traversé de part en part dans le sens de sa longueur par un conduit de lubrification des moyens de transmission (33) qui débouche d'une part, sur la face de compression (10) et d'autre part, sur la face d'appui de piston (8).

11. Piston hydraulique suivant la revendication 1, **caractérisé en ce que** la soupape de refroidissement et lubrification (2) et le piston actionneur de soupape (22) sont réalisés dans un seul et même bloc de matière pour former un ensemble soupape-piston actionneur (34).

12. Piston hydraulique suivant les revendications 10 et 11, **caractérisé en ce que** l'ensemble soupape-piston actionneur (34) est traversé de part en part dans le sens axial par le conduit de lubrification des moyens de transmission (33) autour duquel il peut coulisser tout en formant avec ce dernier une étanchéité.

13. Piston hydraulique suivant les revendications 10 et 11 **caractérisé en ce que** l'ensemble soupape-piston actionneur (34) est traversé de part en part dans le sens axial par le conduit de lubrification des moyens de transmission (33), ledit ensemble (34) formant une partie dudit conduit (33).

14. Piston hydraulique suivant la revendication 13, **caractérisé en ce que** l'ensemble soupape-piston actionneur (34) est terminé par un embout étanche coulissant (41) qui forme une étanchéité avec un cylindre récepteur d'embout (42) aménagé dans le conduit de lubrification des moyens de transmission (33), ledit embout étanche (41) permettant audit ensemble (34) de se mouvoir en translation longitudinale par rapport audit conduit (33).

## Patentansprüche

1. Hydraulischer Kolben (1), der aus einem zylindrischen Körper (6) gebildet ist, der eine äußere zylindrische Oberfläche (13) freilegt, die mit geringem Spiel in einem Zylinder (4) derart untergebracht ist, um einen Zwischenraum (32) zwischen der Oberfläche (13) und dem Zylinder (4) zu lassen, wobei der Kolben (1) in dem Zylinder (4) verschoben werden kann, mit dem er eine Hydraulikkammer (5) mit variablem Volumen bildet, wobei ein erstes Ende des Kolbens (1) eine Kompressionsfläche (10) aufweist, die in die Hydraulikkammer (5) mündet, um den Druck eines Fluids (11) aufzunehmen, während das andere Ende des Kolbens (3) eine Kolbenauflagefläche (8) aufweist, um eine Kraft auf Übertragungsmittel (S) auszuüben, wobei der Kolben (1) aufweist
• Dichtungsmittel (16), die auf der äußeren zylindrischen Oberfläche (13) ausgebildet sind, wobei die Mittel (16) eine Dichtheit mit dem Zylinder (4) bilden können,
• mindestens eine Kühl- und Schmierleitung (7), die ganz oder teilweise in dem zylindrischen Körper (6) ausgebildet ist, wobei die Leitung (7) einerseits mit einem Leitungseintritt (14) beginnt, der direkt oder indirekt mit der Hydraulikkammer (5) kommuniziert, und andererseits mit einem Leitungsauslass (15) endet, der direkt oder indirekt auf Ebene der äußeren zylindrischen Oberfläche (13) mündet, wobei das Fluid (11) in der Leitung (7) von dem Einlass (14) bis zum Auslass (15) zirkulieren kann, wenn der Druck, der in der Hydraulikkammer (5) herrscht, höher ist als der Druck, der in dem Zwischenraum (32) herrscht, während die Dichtungsmittel (16) verhindern, dass das Fluid (11) durch das Äußere des zylindrischen Körpers (6) strömt, um vom Einlass (14) zum Auslass (15) zu gelangen,
• mindestens ein Kühl- und Schmierventil (2), das ganz oder teilweise in der Kühl- und Schmierleitung (7) untergebracht ist und das geöffnet oder geschlossen werden kann, um das Zirkulieren des Fluids (11) in der Leitung (7) jeweils zuzulassen oder zu verbieten: wobei das Ventil (2) eine Fläche zum Absperren des Durchflusses (24) aufweist, die entweder in einem gewissen Abstand zu einer Ventilkontaktfläche (26) bleiben kann, die im Inneren oder am Ende der Kühl- und Schmierleitung (7) ausgebildet ist, um das Fluid (11) durchfließen zu lassen, oder in Kontakt mit der Fläche (26) gehalten werden kann, um mit dieser Letzteren eine dichte Kontaktlinie (25) zu bilden, die den Durchtritt des Fluids (11) verhindert,
• mindestens eine Ventilrückstellfeder (30), die dazu neigt, Fläche zum Absperren des Durchflusses (24) von der Ventilkontaktfläche (26) zu entfernen, und
• mindestens einen Ventilanschlag (3), der den maximalen Entfernungsabstand der Fläche zum Absperren des Durchflusses (24) gegenüber der Ventilkontaktfläche (26) festlegt,
wobei der Kolben (1) **dadurch gekennzeichnet ist, dass** er aufweist:
• mindestens einen Ventilbetätigungskolben (22) der mit dem Kühl- und Schmierventil (2) derart starr verbunden ist, um dieses Letztere beim Schließen und/oder Öffnen betätigen zu können, wobei der Kolben (22) mit geringem Spiel in einem Betätigungszylinder (31) untergebracht ist, der in dem zylindrischen Körper (6) ausgebildet ist, wobei sich der Kolben (22) in Längsverschiebung in dem Zylinder (31) bewegen kann und eine Hochdruckfläche (23) aufweist, die dem Druck ausgesetzt ist, der in der Hydraulikkammer (5) herrscht, während der Kolben (22) auf der gegenüberliegenden Seite der Hochdruckfläche (23) eine niederdruckseitige Fläche (28) aufweist, die direkt oder indirekt entweder mit dem Zwischenraum (32) oder mit der Kolbenauflagefläche (8) oder mit beiden (32, 8) kommuniziert, oder
• mindestens eine Öffnung zur Durchfluss-Kalibrierung (27), die die Fluiddurchflussmenge (11) begrenzt, die in der Kühl- und Schmierleitung (7) zirkulieren kann, wobei die Öffnung (27) - auf dem Fluidweg (11) - in Reihe mit dem Kühl- und Schmierventil (2) und parallel zu dem Ventilbetätigungskolben (22) angeordnet ist.

2. Hydraulischer Kolben nach Anspruch 1, **dadurch gekennzeichnet, dass** die Ventilrückstellfeder (30) ganz oder teilweise im Inneren einer Fluidzwischenkammer (29) angeordnet ist, die zwischen dem Ventilbetätigungskolben (22) und der dichten Kontaktlinie (25) gebildet ist.

3. Hydraulischer Kolben nach Anspruch 1, **dadurch gekennzeichnet, dass** die Dichtungsmittel (16) aus mindestens einem Schneidsegment (17) gebildet sind, das in mindestens einer Segmentnut (18) angeordnet ist, die in dem zylindrischen Körper (6) ausgebildet ist und auf der äußeren zylindrischen Oberfläche (13) mündet.

4. Hydraulischer Kolben nach Anspruch 1, **dadurch gekennzeichnet, dass** die Dichtungsmittel (16) aus mindestens einer kreisförmigen flexiblen Dichtung (19) gebildet sind, die in mindestens einer Segmentnut (18) angeordnet ist, die in dem zylindrischen Körper (6) ausgebildet ist und auf der äußeren zylindrischen Oberfläche (13) mündet.

5. Hydraulischer Kolben nach Anspruch 1, **dadurch gekennzeichnet, dass** eine Entlastungsnut zur Vermeidung von Scherung (20) in dem zylindrischen Körper (6) ausgebildet ist, wobei die Nut (20) auf der äußeren zylindrischen Oberfläche (13) mündet.

6. Hydraulischer Kolben nach Anspruch 1, **dadurch gekennzeichnet, dass** sich der Durchmesser des axialen Endes des zylindrischen Körpers (6), das sich auf der Seite der Kompressionsfläche (10) befindet, über eine bestimmte Länge allmählich verringert, um eine Schräge des Hubs (21) zu bilden.

7. Hydraulischer Kolben nach Anspruch 1, **dadurch gekennzeichnet, dass** der Durchmesser des axialen Endes des Zylinders (4), das gegenüberliegend von der Hydraulikkammer (5) angeordnet ist, über eine bestimmte Länge allmählich zunimmt, um eine Aufweitung des Hubs (12) zu bilden.

8. Hydraulischer Kolben nach Anspruch 1, **dadurch gekennzeichnet, dass** die Öffnung zur Durchfluss-Kalibrierung (27) im Inneren des Ventilbetätigungskolbens (22) ausgebildet ist, wovon sie die Hochdruckfläche (23) und die niederdruckseitige Fläche (28) oder eine beliebige der beiden Flächen (23, 28) mit der äußeren zylindrischen Oberfläche (13) des Kolbens (22) verbindet.

9. Hydraulischer Kolben nach Anspruch 1, **dadurch gekennzeichnet, dass** die Öffnung zur Durchfluss-Kalibrierung (27) aus dem Spiel gebildet ist, das zwischen dem Ventilbetätigungskolben (22) und dem Betätigungszylinder (31) gelassen ist, mit dem der Kolben (22) zusammenwirkt.

10. Hydraulischer Kolben nach Anspruch 1, **dadurch gekennzeichnet, dass** der zylindrische Körper (6) in seiner Längsrichtung von einer Seite zur anderen von einer Schmierleitung der Übertragungsmittel (33) durchquert ist, die einerseits auf der Kompressionsfläche (10) und andererseits auf der Kolbenauflagefläche (8) mündet.

11. Hydraulischer Kolben nach Anspruch 1, **dadurch gekennzeichnet, dass** das Kühl- und Schmierventil (2) und der Ventilbetätigungskolben (22) aus einem einzigen Materialblock hergestellt sind, um eine Ventil-Betätigungszylinder-Anordnung (34) zu bilden.

12. Hydraulischer Kolben nach den Ansprüchen 10 und 11, **dadurch gekennzeichnet, dass** die Ventil-Betätigungszylinder-Anordnung (34) in axialer Richtung von einer Seite zur anderen von der Schmierleitung der Übertragungsmittel (33) durchquert ist, um die sie gleiten kann, indem sie mit dieser Letzeren eine Dichtheit bildet.

13. Hydraulischer Kolben nach den Ansprüchen 10 und 11, **dadurch gekennzeichnet, dass** die Ventil-Betätigungszylinder-Anordnung (34) in axialer Richtung von einer Seite zur anderen von der Schmierleitung der Übertragungsmittel (33) durchquert ist, wobei die Anordnung (34) einen Teil der Leitung (33) bildet.

14. Hydraulischer Kolben nach Anspruch 13, **dadurch gekennzeichnet, dass** die Ventil-Betätigungszylinder-Anordnung (34) mit einem verschiebbaren dichten Endstück (41) abgeschlossen ist, das eine Dichtheit mit einem Zylinder zur Endstückaufnahme (42) bildet, der in der Schmierleitung der Übertragungsmittel (33) ausgebildet ist, wobei das dichte Endstück (41) der Anordnung (34) ermöglicht, in Längsverschiebung gegenüber der Leitung (33) bewegt zu werden,

## Claims

1. A hydraulic piston (1) consisting of a cylindrical body (6) which presents an external cylindrical surface (13) housed with little clearance in a cylinder (4) in such a manner as to leave an interstitial space (32) between said surface (13) and said cylinder (4), said piston (1) being capable of moving by translation in said cylinder (4) with which it forms a hydraulic chamber (5) of variable volume, a first end of said piston (1) having a compression face (10) emerging into the hydraulic chamber (5) in order to receive the pressure of a fluid (11), the other end of said piston (3) having a piston support face (8) in order to exert a force onto transmission means (9), said piston (1) comprising:
• Sealing means (16) arranged on the external cylindrical surface (13), said means (16) being capable of forming a seal with the cylinder (4);
• At least one cooling and lubrication conduit (7) which is arranged entirely or partially in the cylindrical body (6), said conduit (7) starting, on the one hand, with a conduit inlet (14) which communicates directly or indirectly with the hydraulic chamber (5), and ending, on the other hand, with a conduit outlet (15) which emerges directly or indirectly at the level of the external cylindrical surface (13), the fluid (11) being capable of circulating in said conduit (7) from said inlet (14) to said outlet (15) when the pressure existing in the hydraulic chamber (5) is greater than the pressure existing in the interstitial space (32), while the sealing means (16) prevent said fluid (11) from passing through the exterior of the cylindrical body (6) in order to run from said inlet (14) to said outlet (15);
• At least one cooling and lubrication valve (2) housed entirely or partially in the cooling and lubrication conduit (7) and which can open or close in order to respectively allow or prevent the circulation of the fluid (11) in said conduit (7), said valve (2) comprising a flow seal seat (24) which can either remain at a certain distance from a valve contact surface (26) arranged in the interior or at the end of the cooling and lubrication conduit (7) in order to allow the fluid (11) to pass or can be maintained in contact with said surface (26) in order to form with the latter a sealing contact line (25) which prevents the passage of said fluid (11);
• At least one valve return spring (30) which tends to move the flow seal seat (24) away from the valve contact surface (26); and
• At least one valve stop (3) which sets the maximum distance of separation of the flow seal seat (24) with respect to the valve contact surface (26);
said piston (1) being **characterized in that** it comprises:
• At least one valve-actuating piston (22) which is rigidly connected to the cooling and lubrication valve (2) in such a manner as to be able to move the latter for closing and/or opening, said piston (22) being housed with little clearance in an actuator cylinder (31) arranged in or on the cylindrical body (6), said piston (22) being capable of moving by longitudinal translation in said cylinder (31) and having a high-pressure face (23) exposed to the pressure existing in the hydraulic chamber (5), and, opposite said high-pressure face (23), said piston (22) has a low-pressure-side face (28) which communicates directly or indirectly with the interstitial space (32) or with the piston support face (8) or with both of them (32, 8); and
• At least one flow calibration opening (27) which limits the maximum flow of fluid (11) which can circulate in the cooling and lubrication conduit (7), said opening (27) being placed - in the path of the fluid (11) - in series with the cooling and lubrication valve (2) and in parallel with the valve-actuating piston (22).

2. The hydraulic piston according to Claim 1, **characterized in that** the valve return spring (30) is housed entirely or partially in the interior of an intermediate fluid chamber (29) formed between the valve-actuating piston (22) and the sealing contact line (25).

3. The hydraulic piston according to Claim 1, **characterized in that** the sealing means (16) consist of at least one cut segment (17) housed in at least one sealing groove (18) arranged in the cylindrical body (6) and opening on the external cylindrical surface (13).

4. The hydraulic piston according to Claim 1, **characterized in that** the sealing means (16) consist of at least one flexible circular gasket (19) housed in at least one sealing groove (18) arranged in the cylindrical body (6) and opening on the external cylindrical surface (13).

5. The hydraulic piston according to Claim 1, **characterized in that** an anti-shearing clearance groove (20) is arranged in the cylindrical body (6), said groove (20) opening on the external cylindrical surface (13).

6. The hydraulic piston according to Claim 1, **characterized in that** the diameter of the axial end of the cylindrical body (6) located on the side of the compression face (10) gradually decreases over a certain length in order to form a bearing taper (21).

7. The hydraulic piston according to Claim 1, **characterized in that** the diameter of the axial end of the cylinder (4) located opposite the hydraulic chamber (5) gradually increases over a certain length in order to form a bearing enlargement (12).

8. The hydraulic piston according to Claim 1, **characterized in that** the flow calibration opening (27) is arranged in the interior of the valve-actuating piston (22) of which it connects the high-pressure face (23) and the low-pressure-side face (28) or either of said two faces (23, 28) with the external cylindrical surface of said piston (22).

9. The hydraulic piston according to Claim 1, **characterized in that** the flow calibration opening (27) consists of the clearance left between the valve-actuating piston (22) and the actuator cylinder (31) with which said piston (22) cooperates.

10. The hydraulic piston according to Claim 1, **characterized in that** the cylindrical body (6) is lengthwisely entirely passed through by a conduit for lubrication of the transmission means (33) which opens, on the one hand, on the compression face (10) and, on the other hand, on the piston support face (8).

11. The hydraulic piston according to Claim 1, **characterized in that** the cooling and lubrication valve (2) and the valve-actuating piston (22) are made of the same block of material in order to form a valve-actuating piston assembly (34).

12. The hydraulic piston according to Claims 10 and 11, **characterized in that** the valve-actuating piston assembly (34) is axially entirely passed through by the conduit for lubrication of the transmission means (33) around which it is capable to slide while forming a seal with the latter.

13. The hydraulic piston according to Claims 10 and 11, **characterized in that** the valve-actuating piston assembly (34) is axially entirely passed through by the conduit for lubrication of the transmission means (33), said assembly (34) forming a portion of said conduit (33).

14. The hydraulic piston according to Claim 13, **characterized in that** the valve-actuating piston assembly (34) ends with a sliding sealing end-piece (41) which forms a seal with an end-piece receiving cylinder (42) arranged in the conduit for lubrication of the transmission means (33), said sealing end-piece (41) enabling said assembly (34) to move by longitudinal translation with respect to said conduit (33).
